Europäisches Patentamt

European Patent Office

Office européen des brevets

(19)

(11) Veröffentlichungsnummer: **0 014 483**
**B1**

# (12) EUROPÄISCHE PATENTSCHRIFT

(45) Veröffentlichungstag der Patentschrift:
04.11.81

(21) Anmeldenummer: **80100732.9**

(22) Anmeldetag: **13.02.80**

(51) Int. Cl.³: **F 16 D 65/12, B 61 H 5/00,**
**F 16 B 2/14**

(54) **Bremsscheibe, insbesondere für Schienenfahrzeuge.**

(30) Priorität: **13.02.79 DE 2905385**
**16.08.79 DE 2933215**

(43) Veröffentlichungstag der Anmeldung:
**20.08.80 Patentblatt 80/17**

(45) Bekanntmachung des Hinweises auf die Patenterteilung:
**04.11.81 Patentblatt 81/44**

(84) Benannte Vertragsstaaten:
**AT BE CH DE FR GB IT NL SE**

(56) Entgegenhaltungen:
**DE-A1-2 824 676**
**DE-B1-1 158 095**
**DE-C-1 086 093**

(73) Patentinhaber: **Knorr-Bremse GmbH, Moosacher**
**Strasse 80, D-8000 München 40 (DE)**

(72) Erfinder: **Pöllinger, Hans, Rainfarnstrasse 65,**
**D-8000 München 45 (DE)**
Erfinder: **Wirth, Xaver, Dr., Birkhuhnweg 18,**
**D-8045 Ismaning (DE)**

## Bremsscheibe, insbesondere für Schienenfahrzeuge

Die Erfindung bezieht sich auf eine Bremsscheibe, insbesondere für Schienenfahrzeuge, mit einem Nabenkörper, einem diesen umschließenden Reibringkörper, und mit über den Umfang verteilt angeordneten, jeweils in fluchtende, radiale Bohrungen des Nabenkörpers und des Reibringkörpers eingreifenden Spannhülsen, welche durch Verschraubungen in ihrer axialen Lage abgesichert sind.

In der Praxis haben sich beim Einsatz von Schienenfahrzeugen sog. Wellenbremsscheiben bewährt, die aus einem Grauguß-Reibring und einer Stahlguß-Nabe bestehen. Der Graugußwerkstoff bietet den Vorteil eines günstigen Reib- und Wärmeleitverhaltens, während Stahlguß die für die Schrumpfverbindung Welle/Nabe notwendigen Festigkeits- und Dehnungseigenschaften aufweist. Das Hauptproblem dieser sog. »Verbundkonstruktion« stellt dabei die Verbindung zwischen Reibring und Nabe dar, welche neben hohen dynamischen Belastungen (geschwindigkeits- und streckenabhängige Belastungen) vor allem Temperaturbelastungen (Aufweitung des Reib- bzw. Bremsringes) ausgesetzt ist. Zur Lösung dieses Verbindungsproblems existieren bereits zahlreiche konstruktive Varianten, welche größtenteils auf form- bzw. reibschlüssigen oder elastischen Verbindungselementen basieren. Hier sind die sog. Spannhülsenverbindungen zu nennen; bei derartigen Verbindungen werden radial angeordnete, gleichmäßig über den Umfang verteilte und geschlitzte Zylinderspannhülsen verwendet, welche in getrennt oder gemeinsam gebohrte Radialbohrungen von Reibring und Nabe eingepreßt werden.

Bei diesen Bremsscheiben der in Rede stehenden Art (DE-PS 1 086 093) durchsetzt die Verschraubung axial den Innenraum der Spannhülse und hält an den beiden Stirnenden Scheiben, deren Außendurchmesser größer ist als der Spannhülsendurchmesser. Die beiden Scheiben halten dabei die Spannhülsen mit einer gewissen, zur Aufnahme von Wärmedehnungen erforderlichen, axialen Verschiebemöglichkeit relativ zur Nabe bzw. zum Reibring. Hieraus ergibt sich ein undefiniertes Verhalten der Spannhülse bei Wärmedehnungen des Reibrings, d. h. die Spannhülse kann gegenüber der Nabe und gegenüber dem Reibring axial gerichtete Verschiebungen vollziehen. Insbesondere bei ungünstigen Rad/Schiene-Verhältnissen oder bei relativ hohen Geschwindigkeiten tritt infolge Relativbewegungen zwischen der Spannhülse und der Bohrung ein unzulässig hoher Verschleiß (Reibverschleiß, Freßverschleiß, Passungsrost) auf, der zu einer Lockerung des Reibringes und nach Ausschlagen der Paßflächen zum Bruch der Spannhülsen führen kann. Zu diesem hohen Verschleiß kommt es vor allem, da sehr hohe Flächenpressungen zwischen der Spannhülse und der Bohrung bestehen und da sehr große Relativbewegungen zwischen der Bohrungswand und der Spannhülse, vor allem im Bereich der sog. Teilfuge, auftreten können. Derartige Relativbewegungen rühren insbesondere daher, daß die Spannhülse durch ihre Schlitzung eine verhältnismäßig hohe Querelastizität aufweist. Diese Querelastizität ist als Konstruktionsmerkmal hinzunehmen, um Fertigungstoleranzen zwischen dem Reibring und der Nabe bzw. um die thermische Aufweitung der Reibringbohrung gegenüber der Nabenbohrung auszugleichen. Auch kommt es bei diesen Spannhülsenverbindungen der in Rede stehenden Art immer wieder zum Wandern einzelner Spannhülsen, der sog. Mikrobewegung.

Davon ausgehend besteht die Aufgabe der Erfindung darin, eine Bremsscheibe der in Rede stehenden Art so auszubilden, daß die Spannhülsen mit einfachen, keine Schwächung bewirkenden baulichen Mitteln so verspannt werden können, daß sie axial unverschieblich gehalten sind, derart, daß sich nur der Reibringkörper bzw. der Nabenkörper zum Ausgleich von Wärmedehnungen relativ zur Spannhülse verschieben kann.

Diese Aufgabe wird dadurch gelöst, daß jeweils ein Endabschnitt der Spannhülsen mittels einer an deren Innenwandung angreifenden, durch die Verschraubung spannbaren Konuseinrichtung radial aufspreizbar ist.

Durch diese Aufspreizung erfährt die Spannhülse an diesem Endabschnitt zusätzlich zu ihrer Eigenspannung eine zusätzliche, radiale Anpressung an die sie umgebende Bohrungswandung des Naben- oder Reibringkörpers, wodurch der Widerstand gegen ihre Verschiebung relativ zu diesem Naben- oder Reibringkörper wesentlich gesteigert wird. Auftretende Wärmedehnungen werden daher nahezu ausschließlich nur durch Relativverschieben des jeweils anderen Körpers zur Spannhülse ausgeglichen. Es ist somit erreichbar, daß Relativverschiebungen nur zwischen der Spannhülse und dem hinsichtlich des Gleit- bzw. Reibverhaltens aufgrund seines Werkstoffes günstigeren und ggfs. auch konstruktiv hierfür besser gestaltbaren Körpers auftreten.

Eine weitere Lösung der Aufgabe sieht vor, daß die Spannhülsen einen sich in Richtung zur Bremsscheibenmitte verjüngenden Innenkonus besitzen, in welchen je ein Spannrohr eingeführt ist, und daß das Spannrohr jeweils mittels der Verschraubung gegenüber dem Ringflansch des Nabenkörpers verspannbar ist.

Durch die Außenkonus/Innenkonus-Verspannung der Spannhülsen nimmt sie im Bereich der Nabe weitgehend die Eigenschaften eines »starren Bolzens« ein. Ein nach außen gerichtetes Wandern der Spannhülse wird durch den vorgespannten Konus-Formschluß vermieden; in gleicher Weise wird ein durch Mikrobewegungen verursachtes »Hineinarbeiten« infolge der Bolzencharakteristik der Spannhülse ausgeschaltet. Im sog. Reibringauge, also radial außerhalb der Nabe, bleibt die Spannhülse radial elastisch. Dabei kann sie sich der Bohrungsaufweitung des Reibrings infolge Wärmeausdehnung anpassen.

Wird die Schraube mit ihrem Gewindeende in ein Gegengewinde am Sacklochgrund der Nabe der Bremsscheibe eingeschraubt, dann ist infolge des guten Formschlusses sichergestellt, daß keine sog. Mikrobewegungen der Spannhülse auftreten können, d. h., das sog. »Hineinarbeiten« der Spannhülsen ist ausgeschlossen. Die Verbindung kennzeichnet sich außerdem durch leichte Montierbarkeit und Demontierbarkeit. Bei Naben mit »Fenstern«, also Durchbrüchen zwischen Nabenspeichen, kann das Prinzip der formschlüssigen Verspannung beibehalten werden; in diesem Fall ist die Schraube mit ihrem Gewinde nicht im Nabengrund verschraubt, sondern ist über eine Scheibe mit einer Mutter im Eingriff. Diese stützt sich im Bereich ihres Außenumfanges am Material der Nabe außerhalb der Nabenbohrung ab.

Die Erfindung ist nachfolgend anhand von Ausführungsbeispielen unter Bezugnahme auf die Zeichnung erläutert.

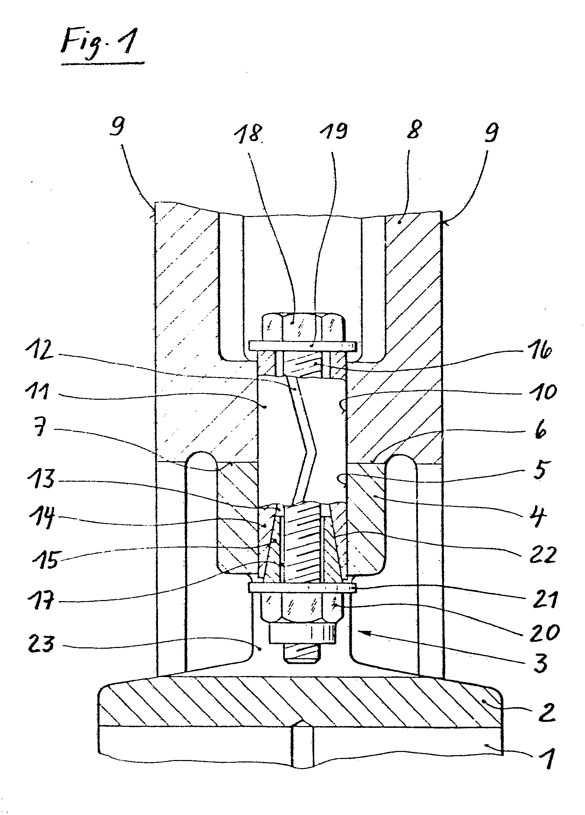

Die Fig. 1—4 veranschaulichen jeweils in einer Teilschnittansicht unterschiedliche Ausführungsformen der Bremsscheibe.

Gemäß Fig. 1 weist ein mittels seiner Bohrung 1 auf einer nicht dargestellten, abzubremsenden Welle starr aufzusetzender Nabenkörper 2 einen Ringflansch 3 auf, der z. B. an drei über den Umfang gleichmäßig verteilten Stellen zu Augen 4 mit radialgerichteter, beidseitig offener Bohrung 5 ausgebildet ist. Der Außenumfang des Ringflansches 3 wird zumindest im Bereich der Augen 4 durch Abschnitte einer zur Bohrung 1 koaxialen Zylindermantelfläche 6 gebildet, welcher mit höchstens geringem Abstand die zylindrische Innenfläche 7 eines Reibringkörpers 8 gegenübersteht. Die beiden äußeren, radialen Stirnflächen 9 des Reibringkörpers 8 stellen die Bremsflächen der Bremsscheibe dar. Anschließend an die Augen 4 ist der Reibringkörper 8 mit zu den Bohrungen 5 fluchtenden, radialen Bohrungen 10 versehen, welche ebenfalls beidseitig offen sind. In die Bohrungen 5 und 10 sind durchgehende, beidseitig geringfügig überstehende Spannhülsen 11 eingesetzt, welche, wie aus Fig. 1 ersichtlich, einen verzahnten Längsschlitz 12 aufweisen können. Der Innenraum 13 des vom Auge 4 umschlossenen Abschnittes 14 der Spannhülse 11 ist sich zum Spannhülsenende hin konisch erweiternd ausgebildet und nimmt einen ihm wenigstens annähernd angepaßten Konuskörper 15 auf. Der Konuskörper 15 überragt, bezogen auf die Bremsscheibe, nach radial innen die Spannhülse 11 geringfügig. Eine zur Spannhülse 11 konzentrische Schraube 16 durchsetzt den ganzen Innenraum der Spannhülse 11 und eine Axialbohrung 17 des Konuskörpers 15. Der Kopf 18 der Schraube 16 stützt sich über eine Scheibe 19 gegen die radial äußere Stirnfläche der Spannhülse 11 ab und eine mit der Schraube 16 verschraubte Mutter 20 liegt über einer Scheibe 21 am aus der Spannhülse 11 herausragenden Ende des Konuskörpers 15 an. Der Außendurchmesser der Scheiben 19 und 21 ist größer als der Außendurchmesser der mit radialer Vorspannung in die Bohrungen 5 und 10 eingesetzten Spannhülse 11. Durch Festziehen der mittels nicht dargestellter Sicherungsmittel gegen Lösen gesicherten Mutter 20 ist der Konuskörper 15 axial gegen die Spannhülse 11 verspannt, welche durch die aneinander anliegenden Konusflächen 22 beider Teile im Bereich des Auges 4 radial aufgespreizt wird und infolgedessen mit erhöhter, radialer Vorspannung an der Wandung der Bohrung 5 anliegt.

Bei Wärmedehnungen des vorzugsweise aus Gußeisen, Grauguß oder einem ähnlichen Werkstoff gefertigten Reibringkörpers 8 kann dieser sich parallel zur Achsrichtung der Spannhülse 11 verschieben, während die Spannhülse 11 selbst infolge ihrer erhöhten Radialverspannung wie ein starrer Bolzen im Auge 4 des vorzugsweise aus Stahlguß gefertigten Nabenkörpers 2 zumindest nahezu unbeweglich festgehalten wird. Eine Gleitbewegung tritt also nur zwischen der Spannhülse 11 und dem Reibringkörper 8 auf, welche infolge ihrer Werkstoffe hierfür günstige Reibpartner bilden. Zwischen der Spannhülse 11 und dem Nabenkörper 2, welche aufgrund ihrer Werkstoffe ungünstige Reibpartner bilden, tritt dagegen keine Relativverschiebung auf.

Die erhöhte Pressung zwischen Spannhülse 11 und Auge 4 des Nabenkörpers 2 sichert die Spannhülse 11 auch gegen das bekannte Wandern nach radial außen oder radial innen, bezogen auf die Bremsscheibe. Eine zusätzliche Sicherung gegen dieses Wandern stellen die ggfs. am Auge 4 bzw. am Reibringkörper 8 zur Anlage gelangenden Scheiben 19 und 21 dar.

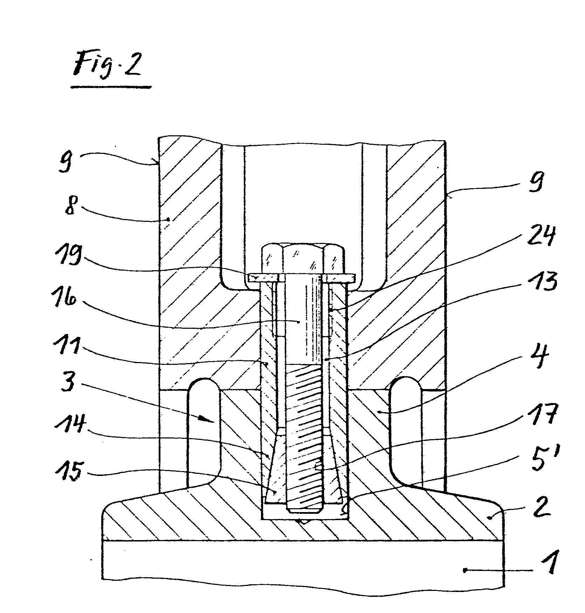

Nach Fig. 2 ist die Axialbohrung 17 des Konuskörpers 15 mit einem Innengewinde versehen, mit welchem die Schraube 16 verschraubt ist. Die Mutter 20 mit Scheibe 21 nach Fig. 1 entfallen bei der Ausführung nach Fig. 2. Die Bohrung 5' des Auges 4 kann als, bezogen auf den Nabenkörper 2. nach radial innen verschlossene Sackbohrung ausgebildet sein; die zur Aufnahme der Mutter 20 bei der Ausführung nach Fig. 1 erforderlichen Durchbrüche 23 des Ringflansches 3 können bei der Ausführung nach Fig. 2 somit entfallen. Der Innenraum 13 der Spannhülse 11 weist anschließend an den sich konisch erweiternden Abschnitt einen zylindrischen Abschnitt auf, in dessen Bereich die Spannhülse 11 mit einem Innengewinde 24 versehen ist. Das Innengewinde 24 dient zum Einschrauben eines Teiles einer Auszieheinrichtung für die Spannhülse 11. Im übrigen entspricht die Ausführung nach Fig. 2 derjenigen nach Fig. 1; zur weiteren Erläuterung sind einige in ihrer Bedeutung aus der Beschreibung zu Fig. 1 ersichtliche, weitere Bezugszahlen in Fig. 2 eingetragen.

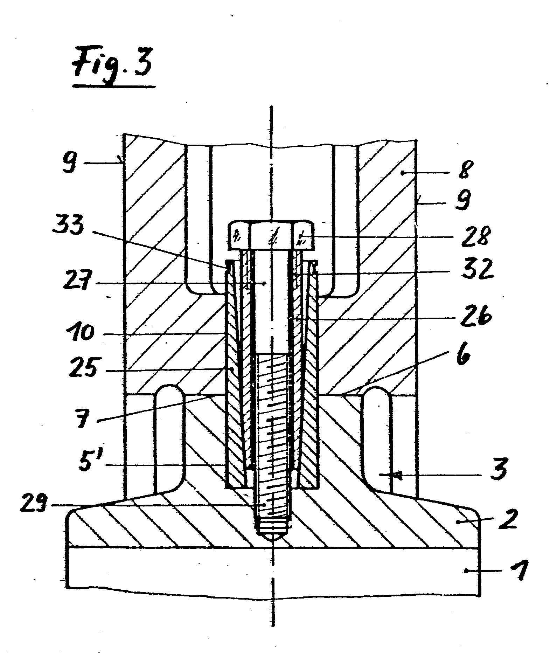

Bei der in Fig. 3 dargestellten Anordnung ist in die fluchtenden Bohrungen 5′ und 9 des Reibringkörpers 8 und des Nabenkörpers 2 eine Spannhülse 25 eingesetzt. Derartige Spannhülsen können unter gewisser Vorspannung in die Bohrungen eingeführt bzw. eingeschlagen werden. Zu diesem Zweck besitzen diese Spannhülsen einen z. B. gepfeilten Schlitz, welcher Umfangs-Relativbewegungen der Spannhülse zuläßt. Gemäß der Erfindung ist die Spannhülse 25 mit einem Innenkegel versehen, d. h. die Innenfläche der Spannhülse ist auf ihrer gesamten Länge oder auf einer Teillänge mit einem gemäß Darstellung (Fig. 3) von oben nach unten sich verengenden Konus ausgebildet. In diese Spannhülse, welche aus Stahl besteht, ist ein gleichfalls aus Stahl oder aus einem vergleichbar harten Material bestehendes Spannrohr 26 eingesetzt. Das Spannrohr ist auf der gesamten Länge oder auf einer Teillänge mit einem Außenkegel versehen, welcher sich gemäß Darstellung in der Zeichnung von oben nach unten gerichtet verjüngt. Beim dargestellten Ausführungsbeispiel nach der Erfindung ist die Spannhülse 25 auf ihrer Gesamtlänge durchgehend mit einem von oben nach unten sich verengenden Konus versehen, während das Spannrohr 26 im oberen Abschnitt zylindrisch ausgebildet ist und etwa im unteren Drittel einen sich verengenden Außenkegel bzw. Außenkonus aufweist. Aus diesem Grunde ist zwischen dem zylindrischen oberen Abschnitt des Spannrohres 26 und der Spannhülse 25 im oberen Bereich eine Winkeldifferenz von beispielsweise 1,5° vorgesehen.

Das Spannrohr 26 ist von einer Schraube 27 durchsetzt, deren Kopf 28 gemäß Darstellung an der Oberseite des Spannrohres 26 aufliegt, während ein Gewindeabschnitt 29 der Schraube nach Fig. 3 in ein Gegengewinde des Nabenkörpers 2 eingreift. Mit Hilfe der Schraube 27 wird demnach das Spannrohr 26 nach unten gerichtet verspannt, derart, daß der Außenkonus des Spannrohrs gegen den Innenkonus der Spannhülse 25 drückt und diese, da sie geschlitzt ist, nach außen an den Ringflansch 3 angepreßt wird. Die Spannhülse 25 bekommt auf diese Weise zumindest im Bereich der Bohrung 5′ »Bolzencharakteristik«, d. h. sie wirkt als Bestandteil des Ringflansches 3. Durch den vorgespannten Formschluß zwischen dem Außenkonus des Spannrohrs und dem Innenkonus der Spannhülse wird verhindert, daß diese nach außen wandert. Ein radial nach innen gerichtetes »Hineinarbeiten« der Spannhülse wird außerdem verhindert, da durch die Bolzencharakteristik der Spannhülse im Nabenbereich keine Mikrobewegungen im Sacklochgrund aufsteht. Im Reibringauge, also radial außerhalb des Ringflansches 3, bleibt die Spannhülse 25 radial elastisch, wobei sie sich der Aufweitung der Bohrung 10 infolge Wärmeausdehnung anpassen kann.

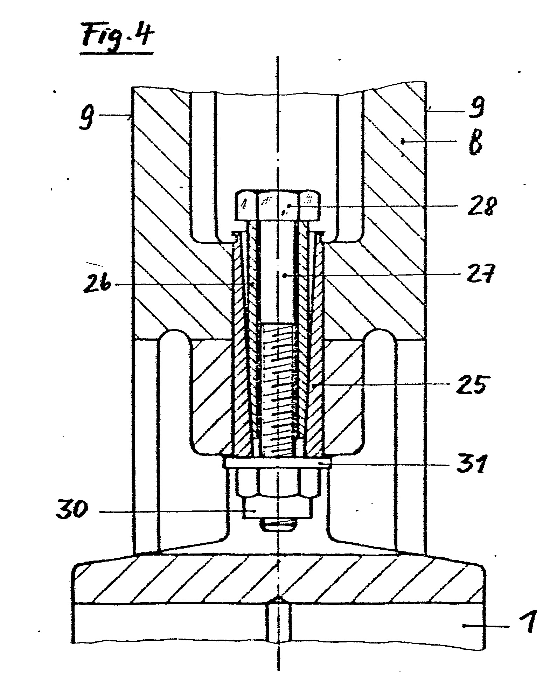

Das gleiche Prinzip der Spannhülsensicherung bzw. -verbindung mit Formschluß ist gemäß Fig. 4 auch möglich, wenn sich die Spannhülse im Bereich des zwischen Speichen der Bremsscheibe befindlichen »Fensters« erstreckt, also in eine radial durchgehende Bohrung des Nabenkörpers und des Reibring- bzw. Reibscheibenkörpers eingesetzt ist. In diesem Fall ist auf den in das Fenster ragenden Gewindeabschnitt 29 der Schraube 27 eine Mutter 30 aufgeschraubt und wirkt über eine Scheibe 31 auf die radial innere Endfläche der Spannhülse 25 und auf den die Bohrung 5′ des Nabenkörpers 2 umgebenden Flächenbereich. Auch bei dieser Anordnung einer Konusverbindung ist absolut sicher verhindert, daß die Spannhülse wandern kann, da diese bei entsprechend starker Verschraubung der Mutter 30 gegenüber der Schraube 27 innerhalb des Nabenkörpers 2 so verspannbar ist, daß sie Bolzencharakteristik besitzt.

Anstelle der in Fig. 4 dargestellten Anordnung ist auch eine umgekehrte Lage der Schraube 27 möglich, derart, daß sich der Kopf 28 an der Unterseite der Spannhülse befindet, während die Mutter 30 radial von außen auf die Schraube aufgeschraubt wird.

Nach Fig. 3 ist das Spannrohr 26 mit einem schematisch angedeuteten Innengewinde 32 versehen, welches dazu dient, eine Zugeinrichtung zum Herausziehen des Spannrohres einzuschrauben. Die Spannhülse 25 ist an ihrem oberen Ende mit einer Außenrille 33 versehen, welche benutzt werden kann, um ein zum Herausziehen dienendes Werkzeug einzuhängen. Auf diese Weise ist die Konusverbindung nach Lösen der Schraubverbindung leicht demontierbar.

Abweichend zu den vorstehend beschriebenen Ausführungsbeispielen kann die erfindungsgemäße Bremsscheibe auch als sog. Radbremsscheibe ausgebildet werden; derartige Umgestaltungen von Wellen- in Radbremsscheiben sind bekannt, weshalb die Ausbildung als Radbremsscheibe keiner näheren Erläuterung bedarf.

**Patentansprüche**

1. Bremsscheibe, insbesondere für Schienenfahrzeuge, mit einem Nabenkörper (2), einem diesen umschließenden Reibringkörper (8) und mit über den Umfang verteilt angeordneten, jeweils in fluchtende, radiale Bohrungen des Nabenkörpers (2) und des Reibringkörpers (8) eingreifenden Spannhülsen (11), welche durch Verschraubungen (16) in ihrer axialen Lage abgesichert sind, dadurch gekennzeichnet, daß jeweils ein Endabschnitt (14) der Spannhülsen (11) mittels einer an deren Innenwandung angreifenden, durch die Verschraubung (Schraube 16) spannbarer Konuseinrichtung radial aufspreizbar ist.

2. Bremsscheibe nach Anspruch 1, dadurch gekennzeichnet, daß das in die Bohrung (5) des Nabenkörpers (2) eingreifende Ende der Spannhülse (11) aufspreizbar ist.

3. Bremsscheibe nach Anspruch 1, dadurch gekennzeichnet, daß der Innenraum (13) der Spannhülsen (11) sich zu einem Spannhülsen-Ende hin konisch erweiternd ausgebildet ist, und daß sich in diesem Innenraum ein diesem wenigstens annähernd angepaßter Konuskörper (15) befindet, der mittels der sich gegen das andere Ende der Spannhülse (11) abstützenden Verschraubung axial verspannbar ist.

4. Bremsscheibe nach Anspruch 3, dadurch gekennzeichnet, daß der Innenraum (23) der Spannhülse (11) einen zylindrischen Abschnitt und den sich an dieser anschließenden, sich konisch erweiternden Abschnitt aufweist.

5. Bremsscheibe, insbesondere für Schienenfahrzeuge, mit einem Nabenkörper (2), einem dieren umschließenden Reibringkörper (8) und mit über den Umfang verteilt angeordneten, jeweils in fluchtende, radiale Bohrungen des Nabenkörpers (2) und des Reibringkörpers (8) eingreifenden Spannhülsen (25), welche durch Verschraubungen (27) in ihrer axialen Lage abgesichert sind, dadurch gekennzeichnet, daß die Spannhülsen (25) einen sich in Richtung zur Bremsscheibenmitte verjüngenden Innenkonus besitzen, in welchen je ein Spannrohr (25) eingeführt ist, und daß das Spannrohr (26) mittels der Verschraubung gegenüber dem Ringflansch (3) des Nabenkörpers (2) verspannbar ist.

6. Bremsscheibe nach Anspruch 1, dadurch gekennzeichnet, daß das Spannrohr (26) wenigstens auf einem Teil seiner Gesamtlänge einen sich in Richtung zur Bremsscheibenmitte verjüngenden Außenkonus besitzt, welcher am Innenkonus der Spannhülse angreift.

7. Bremsscheibe nach Anspruch 5, dadurch gekennzeichnet, daß die Verschraubung durch eine Schraube (27) gebildet ist, deren Kopf (28) am radial außen liegenden, aus der Spannhülse sich erstreckenden Ende des Spannrohrs (26) anliegt, während der Gewindeabschnitt (29) der Schraube aus dem radial inneren Ende des Spannrohrs und der Spannhülse hervorsteht und in ein Gegengewinde des Nabenkörpers (2) eingreift.

8. Bremsscheibe nach Anspruch 5, bei Führung der Spannhülse in einer beidseitig offenen Bohrung des Nabenkörpers und des Reibringkörpers, dadurch gekennzeichnet, daß die Verschraubung durch eine Schraube (27) gebildet ist, deren Kopf (28) an dem radial äußeren, aus der Spannhülse (25) sich erstreckenden Ende des Spannrohrs (26) anliegt, und daß auf den radial inneren, aus der freien Bohrung (5') des Nabenkörpers sich erstreckenden Gewindeabschnitt (29) der Schraube (27) eine Mutter (30) aufgeschraubt ist, welche sich mit ihrem Außenumfang außerhalb der Bohrung (5') am Nabenkörper abstützt.

9. Bremsscheibe nach einem der vorangehenden Ansprüche 5 bis 8, dadurch gekennzeichnet, daß das Spannrohr (26) an seinem radial außen liegenden Ende ein Innengewinde (32) aufweist, in welches ein Zugteil einer Auszieheinrichtung einschraubbar ist.

10. Bremsscheibe nach einem der vorangehenden Ansprüche, dadurch gekennzeichnet, daß am radial äußeren Ende der Spannhülse (11, 25) Mittel vorgesehen sind, an welchem ein Zugteil einer Auszieheinrichtung befestigbar ist.

## Claims

1. Brake disc, particularly for rolling stock, with a hub body (2), a frictional annular body (8) enclosing this and with clamping sleeves (11) distributed over the circumference and projecting respectively into aligning, radial bores of the hub body (2) and of the frictional annular body (8), which sleeves are secured in their axial position by screw joints (16), characterised in that in each case one end section (14) of the clamping sleeves (11) is radially expandable by means of a conical device touching their inner wall and braceable by the screw joint (screw 16).

2. Brake disc according to claim 1, characterised in that the end of the clamping sleeve (11) projecting into the bore (5) of the hub body (2) is expandable.

3. Brake disc according to claim 1, characterised in that the inner space (13) of the clamping sleeves (11) is designed to expand conically towards a clamping sleeve end, and in that situated in this inner space is a conical body (15) matched at least approxiamtely to it, which is axially braceable by means of the screw joint supported against the other end of the clamping sleeve (11).

4. Brake disc according to claim 3, characterised in that the inner space (13) of the clamping sleeve (11) has a cylindrical section and the conically expanding section abutting it.

5. Brake disc, particularly for rolling stock, with a hub body (2), a frictional annular body (8) enclosing this and with clamping sleeves (25) distributed over the circumference and projecting respectively into aligning radial bores of the hub body (2) and the frictional annular body (8), which are secured in their axial position by screw joints (27), characterised in that the clamping sleeves (25) have an inner cone tapering towards the centre of the brake disc, into which cone a bracing tube (26) is introduced in each case, and in that the clamping tube (26) is braceable in relation to the annular flange (3) of the hub body (2) by means of the screw joint.

6. Brake disc according to claim 1, characterised in that the clamping tube (26) has, at least on part of its whole length, an outer cone tapering towards the centre of the brake disc, which cone touches the inner cone of the clamping sleeve.

7. Brake disc according to claim 5, characterised in that the screw joint is formed by a screw (27), whose head (28) abuts the end of the clamping tube (26) lying radially outwardly and extending out of the clamping sleeve, whilst the threaded section (29) of the screw projects out of the radially inner end of the clamping tube and the clamping sleeve and engages in a counter thread of the hub body (2).

8. Brake disc according to claim 5, with the clamping sleeve introduced into a bore of the hub body and the frictional annular body open on both sides, characterised in that the screw joint is formed by a screw (27), whose head (28) abuts the radially outer end of the clamping tube extending out of the clamping sleeve (25), and in that there is screwed on to the radially inner threaded section (29) of the screw (27) extending out of the free bore (5') of the hub body a nut (30), which is supported with its outer circumference outside the bore (5') on the hub body.

9. Brake disc according to one of the above claims 5 to 8, characterised in that the clamping tube (26) has on its radially outer end an inner thread (32) »into which a draw portion of an extracting device can be screwed.

10. Brake disc according to one of the above claims, characterised in that provided on the radially outer end of the clamping sleeve (11, 25) are means to which a draw portion of an ectracting device can be secured.

**Revendications**

1. Disque de frein, en particulier pour des véhicules sur rails, du type comportant un corps de moyeu (2), un corps annulaire de friction (8) et des douilles de serrage (11) réparties périphériquement et dont chacune pénètre dans des perçcages alignés radialement et ménagés dans le corps de moyeu (2) et dans le corps annulaire de friction (8), lesdites douilles étant assurées dans leur position axiale au moyen de boulonnages (16), caractérisé par le fait qu'une section d'extrémité (14) des douilles de serrage (11) est susceptible d'expansion radiale au moyen d'un dispositif à cône attaquant la paroi intérieure des douilles et susceptible d'être mis sous tension à l'aide des boulonnages (vis 16).

2. Disque de frein selon la revendication 1, caractérisé par le fait que l'extrémité de la douille de serrage (11) qui pénètre dans le perçage (5) du corps de moyeu (2) est expansible.

3. Disque de frein selon la revendication 1, caractérisé par le fait que l'espace intérieur (13) des douilles de serrage (11) s'évase coniquement vers l'une des extrémités de la douille de serrage, et que dans cet espace intérieur est disposé un corps conique (15) qui s'y adapte au moins approximativement et qui est susceptible d'être soumis à une tension axiale en direction du boulonnage prenant appui contre l'autre extrémité de la douille de serrage (11).

4. Disque de frein selon la revendication 3, caractérisé par le fait que l'espace intérieur (13) de la douille de serrage (11) comporte une section cylindrique et une section s'élargissant coniquement et se raccordant à la précédente section.

5. Disque de frein, en particulier pour des véhicules sur rails, du type comportant un corps de moyeu (2), un corps annulaire de friction (8) et des douilles de serrage (11) réparties périphériquement et dont chacune pénètre dans des perçages alignés radialement et ménagés dans le corps de moyeu (2) et dans le corps annulaire de friction (8), lesdites douilles étant assurées dans leur position axiale au moyen de boulonnages (16), caractérisé par le fait que les douilles de serrage (25) comportent un cône intérieur s'amincissant en direction du milieu du disque de frein dans lequel est engagé un tube de serrage (26) par douille, et que le tube de serrage est susceptible d'être soumis à une tension par rapport au flasque annulaire (3) du corps de moyeu (2), au moyen du boulonnage.

6. Disque de frein selon la revendication 1, caractérisé par le fait que le tube de serrage (26) possède, au moins sur une partie de sa longueur totale, un cône extérieur s'amincissant en direction du milieu du disque de frein et attaquant le cône intérieur de la douille de serrage.

7. Disque de frein selon la revendication 5, caractérisé par le fait que le boulonnage est formé par un boulon (27) dont la tête (28) porte contre l'extrémité, située radialement vers l'extérieur, du tube de serrage (26) qui s'étend au-delà de la douille de serrage, alors que la section filetée (29) du boulon fait saillie au-delà de l'extrémité radiale intérieure du tube de serrage et de la douille de serrage et pénètre dans un contre-filetage du corps de moyeu (2).

8. Disque de frein selon la revendication 5, dans lequel la douille de serrage est guidée dans un perçage, ouvert des deux côtés, et ménagé dans le corps de moyeu et dans le corps annulaire de friction, caractérisé par le fait que le boulonnage est constitué par un boulon (27) dont la tête (28) porte contre l'extrémité, située radialement vers l'extérieur, du tube de serrage (26) qui s'étend au-delà de la douille de serrage (25) et que sur la section filetée (29), radialement intérieure et s'ètendant au-delà du perçage dégagé (5') du corps de moyeu, est vissé un écrou (30) qui porte, par sa périphérie extérieure, en dehors du perçage, contre le corps de moyeu.

9. Disque de frein selon l'une des revendications précédentes 5 à 8, caractérisé par le fait que le tube de serrage (26) comporte, à son extrémité radialement extérieure, un filetage intérieur (32) dans lequel est susceptible d'être vissé un élément de traction d'un dispositif de traction.

10. Disque de frein selon l'une des revendications précédentes, caractérisé par le fait qu'à l'extrémité, radialement extérieure, de la douille de serrage (11, 25) sont prévus des moyens auxquels est susceptible d'être fixé un élément de traction d'un dispositif de traction.

# Fig. 1

# Fig. 2

*Fig. 3*

Fig.4